(19) **Europäisches Patentamt / European Patent Office / Office européen des brevets**

(11) **EP 4 734 405 A1**

(12) **EUROPEAN PATENT APPLICATION**
published in accordance with Art. 153(4) EPC

(43) Date of publication:
**29.04.2026 Bulletin 2026/18**

(21) Application number: **24853401.8**

(22) Date of filing: **02.07.2024**

(51) International Patent Classification (IPC):
**H04B 11/00** (2006.01)

(52) Cooperative Patent Classification (CPC):
**H01P 3/00; H04B 11/00; H04B 15/00**

(86) International application number:
**PCT/CN2024/103061**

(87) International publication number:
**WO 2025/035986 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.08.2023 CN 202311039385**

(71) Applicants:
• **The University of Hong Kong**
**Hong Kong (HK)**
• **National Center for Nanoscience and Technology**
**Beijing 100190 (CN)**

(72) Inventors:
• **ZHANG, Shuang**
**Hong Kong, Pokfulam Hong Kong (CN)**
• **GUAN, Fuxin**
**Hong Kong, Pokfulam Hong Kong (CN)**
• **DAI, Qing**
**Beijing 100190 (CN)**
• **GUO, Xiangdong**
**Beijing 100190 (CN)**

(74) Representative: **BSB Patentanwälte**
**Schütte & Engelen Partnerschaft mbB**
**Am Markt 10**
**59302 Oelde (DE)**

(54) **METHOD FOR COMPENSATING FOR LOSS IN WAVE PROPAGATION**

(57)  A method for compensating for losses in wave propagation is provided, including: obtaining a real frequency response based on a measurement result of wave propagation; selecting a complex frequency based on a frequency of a wave and a dielectric constant of a dielectric to at least partially offset an imaginary part of an in-plane wave vector in wave propagation; and obtaining a complex frequency response based on a plurality of real frequency responses and the complex frequency to compensate for losses in wave propagation.

---

S101: Obtain a real frequency response based on a measurement result of wave propagation

S102: Select a complex frequency based on a frequency of a wave and a dielectric constant of a dielectric to at least partially offset an imaginary part of an in-plane wave vector in wave propagation

S103: Obtain a complex frequency response based on a plurality of real frequency responses and the complex frequency to compensate for losses in wave propagation

FIG. 1

EP 4 734 405 A1

**Description**

TECHNICAL FIELD

The present invention relates to the field of wave propagation, and in particular, to a method for compensating for losses in wave propagation by synthesizing complex frequency waves.

BACKGROUND

Polaritons are a type of surface electromagnetic waves formed by interaction between particles on a dielectric surface and an incident light field. Surface plasmon polaritons based on electron-photon hybridization and phonon polaritons based on phonon-photon hybridization are included. The energy density of such polariton electromagnetic waves is higher than that of the incident light field, so that a strong electric field enhancement effect can be generated on the dielectric surface. The polaritons can compress and focus a light field to an extremely small scale, thereby implementing optical information transmission and processing on the nano scale. Benefiting from sub-wavelength confinement of light, the surface plasmon polaritons and the phonon polaritons provide a method of surpassing the diffraction limit of conventional optics and facilitate efficient energy storage, local field enhancement, and high sensitivity. However, losses limit the propagation length of the polaritons, thereby limiting the actual use of the polaritons. Although optimization of manufacturing technologies can help avoid scattering losses caused by imperfect structures, intrinsic losses that lead to heat generation cannot be eliminated. Therefore, how to overcome intrinsic losses to implement lossless propagation of waves is an urgent problem to be resolved in the art.

SUMMARY

In view of the foregoing problems in the prior art, the present invention proposes a method for compensating for losses in wave propagation by synthesizing complex frequency waves, including:

obtaining a real frequency response based on a measurement result of wave propagation;
selecting a complex frequency based on a frequency of a wave and a dielectric constant of a dielectric to at least partially offset an imaginary part of an in-plane wave vector in wave propagation; and
obtaining a complex frequency response based on a plurality of real frequency responses and the complex frequency to compensate for losses in wave propagation.

In an embodiment, the step of obtaining a complex frequency response based on a plurality of real frequency responses and the complex frequency to compensate for losses in wave propagation includes calculating a complex frequency response by using the following formula:

$$F(\widetilde{\omega}, r, t) \approx \sum_i F(\omega'_i, r) e^{-i\omega'_i t} \Delta\omega / (2\pi i(\widetilde{\omega} - \omega'_i))$$

$F(\omega'_i, r)$ is a real frequency response, $F(\widetilde{\omega}, r, t)$ is a complex frequency response, $\omega'_i$ is a real frequency, $i$ is a positive integer, $\widetilde{\omega}$ is a complex frequency, $t$ is a time, $\Delta\omega$ is an interval frequency of the real frequency $\omega'_i$, and r is a location of a wave.

In an embodiment, the wave is a polariton, and the measurement result of wave propagation is an electric field strength of the wave.

In an embodiment, the complex frequency $\widetilde{\omega} = \omega - i\beta$, $\omega$ is a central frequency, and $\beta$ is a virtual gain, which is selected to enable the imaginary part of the in-plane wave vector to be zero.

In an embodiment, a dielectric constant of a dielectric in which a wave propagates is described by a Drude model as $\varepsilon_m = \varepsilon_r - \omega_p^2 / (\omega^2 + i\omega\gamma)$, $\varepsilon_m$ is the dielectric constant of the dielectric, $\varepsilon_r$ is a dielectric constant when the frequency $\omega$ tends to infinity, $\omega_p$ is a plasmon polariton frequency of a dielectric layer, and $\gamma$ is a damping rate of the dielectric layer.

In an embodiment, $\beta \approx \gamma \omega_p^2 \omega^2 / (2(\omega_p^2 - \varepsilon_r \omega^2)^2 + 2\varepsilon_r \omega^4)$.

In an embodiment, a dielectric constant of a dielectric in which a wave propagates is described by a Lorentz model as $\varepsilon_m = \varepsilon_r - \omega_p^2 / (\omega^2 + i\omega\gamma - \omega_0^2)$, $\varepsilon_m$ is the dielectric constant of the dielectric, $\varepsilon_r$ is a dielectric constant when the frequency $\omega$

tends to infinity, $\omega_p$ is a plasmon polariton frequency of a dielectric layer, y is a damping rate of the dielectric layer, and $\omega_0$ is a resonance frequency of the model.

In an embodiment,

$$\beta \approx 0.5\gamma\omega_p^2\omega^2/(\varepsilon_r(\varepsilon_r+1)(\omega^2-\omega_0^2)^2 + \left(\omega_0^2 + 2\varepsilon_r(\omega_0^2-\omega^2)\right)\omega_p^2 + \omega_p^4)$$ .

The present invention further provides a computer-readable storage medium, including a computer program thereon, where the computer program can be executed by a processor to implement the steps of the foregoing method.

The present invention further provides an electronic device, including:

one or more processors; and
a memory, configured to store one or more executable instructions.

The one or more processors are configured to implement the steps of the foregoing method via executing the one or more executable instructions.

In the method for compensating for losses in wave propagation by synthesizing complex frequency waves in the present invention, complex frequency waves are synthesized by using a complex frequency with a virtual gain and a plurality of real frequency responses, so that losses in wave propagation can be compensated for, to implement lossless propagation of waves.

BRIEF DESCRIPTION OF DRAWINGS

FIG. 1 shows a flowchart of a method for compensating for losses in wave propagation by synthesizing complex frequency waves according to an embodiment of the present invention.

FIG. 2A shows an excited field distribution of surface plasmon polaritons (SPPs).

FIG. 2B shows corresponding Fourier distribution of the SPPs.

FIG. 2C shows dispersion under complex frequency excitation.

FIG. 2D shows dynamic evolution at different times of complex frequency excitation at $\tilde{f}$ = (700 - 42.3i) THz.

FIG. 2E shows corresponding spatial field distributions at $t = 5.5 \times 10^{-2}$ps.

FIG. 3A shows an experimental apparatus based on scattering-type scanning near-field optical microscopy technology.

FIG. 3B shows field distributions of two real frequencies.

FIG. 3C shows field distributions of two complex frequencies.

FIG. 4 shows atomic force microscopy images that show near-field distributions on a $MoO_3$ interface measured at different frequencies.

FIG. 5A shows synthesized electric field distributions of a complex frequency (910 - 6.5i) $cm^{-1}$ at different times, with a time step of 0.53 ps.

FIG. 5B shows imaging patterns with different numbers of synthesized frequencies, where a center frequency is fixed at 910 $cm^{-1}$ and a frequency interval is fixed at 1 $cm^{-1}$.

FIG. 6A shows an atomic force microscopy image of an experimental sample.

FIG. 6B shows an amplitude and a real part of an electric field distribution at a frequency of $f$ = 990 $cm^{-1}$.

FIG. 6C shows an interference pattern between antennas at a frequency of $f$=(990-2i) $cm^{-1}$.

DETAILED DESCRIPTION

To make the objectives, technical solutions, and advantages of the present invention clearer, the following further describes the present invention in detail through specific embodiments with reference to the accompanying drawings. It should be noted that the embodiments provided in the present invention are used only for description, and are not intended to limit the protection scope of the present invention.

Polaritons, including surface plasmon polaritons (SPP) and phonon polaritons (PhP), have become the first choice for constructing nano-photon circuits, thereby facilitating development of ultra-compact and high-speed optical devices. The use of polaritons in nano scale photonics provides a way to overcome the diffraction limit of light, so that light can be manipulated on the nano scale. However, intrinsic losses impede many loss-sensitive polariton-based applications, including waveguide, bio-sensing, sub-diffraction-limit imaging, and plasma structured illumination microscopy. The intrinsic losses adversely affect polaritons primarily in two aspects: (1) significantly shortening a propagation distance; and (2) significantly blurring a dispersion curve of polaritons far from a light cone, which seriously affects a sub-wavelength application of the polaritons.

The intrinsic losses are caused by an imaginary part of a dielectric in a material, such as Ohmic losses in a plasmon polariton system and a lattice vibration relaxation process in a phonon-plasmon polariton system. The most common method for offsetting losses is to incorporate an external gain medium. However, completely offsetting plasmonic losses with gains is highly challenging, and gain compensation is susceptible to noise and instability. Through research, the present invention proposes a method for implementing lossless propagation of waves by synthesizing complex frequency waves, which can implement almost lossless propagation of a highly confined polaritons.

A typical material that supports plasmon/phonon polaritons may be described by using a Drude model, a Lorentz model, or a multi-Lorentz model, which includes loss terms that result in an imaginary part of an in-plane wave vector.

For simplicity, SPPs at an interface are used as an example for description. A mathematical solution of an in-plane wave vector $k$ is $k = \omega\sqrt{\varepsilon_m}/(c\sqrt{1+\varepsilon_m})$, , where $\omega$ is a wave frequency, c is a light speed, and $\varepsilon_m$ is a dielectric constant of a dielectric. In an embodiment, it is assumed that a dielectric constant $\varepsilon_m$ of a plasmonic metal is described by the Drude model, that is $\varepsilon_m = \varepsilon_r - \omega_p^2/(\omega^2 + i\omega\gamma)$, where $\varepsilon_r$ is a dielectric constant when the frequency $\omega$ tends to infinity, $\omega_p$ is a plasmon polariton frequency of a dielectric layer, and $\gamma$ is a damping rate of the dielectric layer. A dissipative term in the denominator introduces decay to the propagation of SPPs. It is generally considered that compensating for losses in the Drude model by using a specific complex frequency $\tilde{\omega} = \omega - i\gamma/2$ can implement lossless propagation of SPPs. However, this is not completely accurate. After the complex frequency $\tilde{\omega}$ is substituted into the formula of the in-plane wave vector $k$, there is still a frequency-dependent term $\tilde{\omega}$ in the in-plane wave vector $k$, which causes an imaginary part to appear in the wave vector $k$. Therefore, a condition for wave lossless propagation should be that the imaginary part of the in-plane wave vector k is 0, that is, $Im(k(\tilde{\omega}))=0$, that is, $Im(k(\tilde{\omega})^2)=0$, to obtain:

$$Im(\tilde{\omega}^2\varepsilon_m(\tilde{\omega})/(1+\varepsilon_m(\tilde{\omega})))=0 \qquad (1)$$

$\tilde{\omega} = \omega - i\beta$, $\omega$ corresponds to a center frequency, $\beta$ represents a virtual gain, $\omega \gg \beta$, and $\omega_p \gg \gamma$. By ignoring a second order small quantity, the following is obtained:

$$\tilde{\omega}^2 \approx \omega^2 - 2i\beta\omega \qquad (2)$$

The equation (2) is substituted into the equation (1) to obtain:

$$Im\left((\omega^2 - 2i\beta\omega)\frac{(\omega^2 - 2i\beta\omega + i\omega\gamma)\varepsilon_r - \omega_p^2}{(\omega^2 - 2i\beta\omega + i\omega\gamma)(\varepsilon_r + 1) - \omega_p^2}\right) = 0 \qquad (3)$$

Therefore, the following is obtained:

$$\beta \approx \gamma\omega_p^2\omega^2/\left(2\left(\omega_p^2 - \varepsilon_r\omega^2\right)^2 + 2\varepsilon_r\omega^4\right) \qquad (4)$$

The resulting complex frequency $\tilde{\omega} = \omega - i\beta$ can ensure that the imaginary part of the in-plane wave vector k is zero, which means that the SPPs do not have spatial growth or decay along the interface. Therefore, to implement lossless propagation, an appropriate value for an imaginary part of the complex frequency needs to be found.

In another embodiment, it is assumed that the dielectric constant $\varepsilon_m$ of the plasmonic metal is described by the Lorenz model, that is, $\varepsilon_m = \varepsilon_r - \omega_p^2/(\omega^2 + i\omega\gamma - \omega_0^2)$, $\omega_0$ is the resonance frequency of the model. The imaginary part $\beta$ of the complex frequency $\tilde{\omega}$ may be obtained as follows:

$$\beta \approx 0.5\gamma\omega_p^2\omega^2/(\varepsilon_r(\varepsilon_r + 1)(\omega^2 - \omega_0^2)^2 + \left(\omega_0^2 + 2\varepsilon_r(\omega_0^2 - \omega^2)\right)\omega_p^2 + \omega_p^4) \qquad (5)$$

It can be learned from the foregoing formula that, by selecting the value of the imaginary part $\beta$ of the complex frequency $\tilde{\omega}$, the imaginary part of the in-plane wave vector is 0, which can offset intrinsic losses and implement lossless propagation of waves. In another embodiment, the value of the imaginary part $\beta$ of the complex frequency $\tilde{\omega}$ may also be selected so that the imaginary part of the in-plane wave vector approaches to 0 to at least partially compensate for the losses, so that the waves can propagate further.

A person skilled in the art should understand that the foregoing formulas (4) and (5) are merely exemplary, and do not constitute a limitation on the present invention. Other models may alternatively be used to describe the dielectric constant $\varepsilon_m$, to obtain values of imaginary parts of different complex frequencies. Therefore, in an actual application, the imaginary part of the in-plane wave vector can be made exactly 0 or close to 0, and the complex frequency obtained by means of calculation can at least partially offset the imaginary part of the in-plane wave vector, so that the intrinsic losses are at least partially offset, and propagation losses of waves are reduced.

After determining to select the value of the imaginary part $\beta$ of the complex frequency $\tilde{\omega}$, the following describes how to generate a complex frequency wave by using the value, to implement lossless propagation of the wave or cause the wave to propagate further.

Complex frequency waves $E(t) = e^{-i\tilde{\omega}t}$ with time attenuation are diverging when the time is close to negative infinity. Because it is very difficult to directly generate the complex frequency waves, the inventor of the present invention uses a new method to synthesize truncated complex frequency waves, represented as $E_T(t) = e^{-i\tilde{\omega}t}\theta(t)$, where $E_T(t)$ is the strength of the truncated complex frequency waves; and $\theta(t)$ is a time truncation function that avoids divergence of energy, where for time $t \geq 0$, $\theta(t) = 1$, and for time $t < 0$, $\theta(t) = 0$.

By using Fourier transform, the truncated complex frequency waves may be expanded into a real frequency domain $1/2\pi i(\tilde{\omega} - \omega')$, which takes the form of a Lorentz linear type. In a final electric field in a time domain, the truncated complex frequency waves may be represented as $E_T(t) = \frac{1}{2\pi}\int_{-\infty}^{+\infty}\frac{1}{i(\tilde{\omega}-\omega')}e^{-i\omega't}d\omega'$, where $1/i(\tilde{\omega} - \omega')$ is a Fourier coefficient. Naturally, any response $F(\tilde{\omega})$ (e.g., electric field strength, magnetic field strength, etc.) in a system excited by the truncated complex frequency waves may be represented as an integral of a real frequency response in a quasi-steady state $F(\tilde{\omega}) \approx \int_{-\infty}^{+\infty}F(\omega')\frac{1}{i(\tilde{\omega}-\omega')}e^{i(\tilde{\omega}-\omega')t}d\omega'/2\pi$. In fact, for a spectrum range that is wide enough, the foregoing integral may be discretized as follows:

$$F(\tilde{\omega}, r, t) \approx \sum_i F(\omega'_i, r)e^{-i\omega'_i t}\Delta\omega/(2\pi i(\tilde{\omega} - \omega'_i)) \qquad (6)$$

$F(\tilde{\omega}, r, t)$ may be any physical quantity that represents wave propagation, such as electric field strength and magnetic field strength. $\omega'_i$ is a real frequency, $F(\omega'_i, r)$ is a real frequency response at the real frequency $\omega'_i$, where i is a positive integer, and r is a location of a wave, for example, one-dimensional or two-dimensional coordinates. $F(\tilde{\omega}, r, t)$ may be calculated based on the measurement and/or calculation results $F(\omega'_i, r)$ at a plurality of real frequency $\omega'_i$. Discrete frequencies $\omega'_1, \omega'_2, ....,$ and $\omega'_i$ are equally spaced with an interval of $\Delta\omega$. The complex frequency $\tilde{\omega} = \omega - i\beta$, and the complex frequency $\tilde{\omega}$ is substituted into the foregoing formula (6) to at least partially offset the intrinsic losses.

Based on the foregoing content, the attenuation length of highly confined polaritons may be significantly enhanced by using a complex frequency method, and almost lossless propagation confined only by a noise level may be recovered. However, a person skilled in the art should understand that a method for increasing the attenuation length by synthesizing complex frequency waves may also be applied to waves of other frequency ranges and others, including but not limited to acoustic waves and elastic waves.

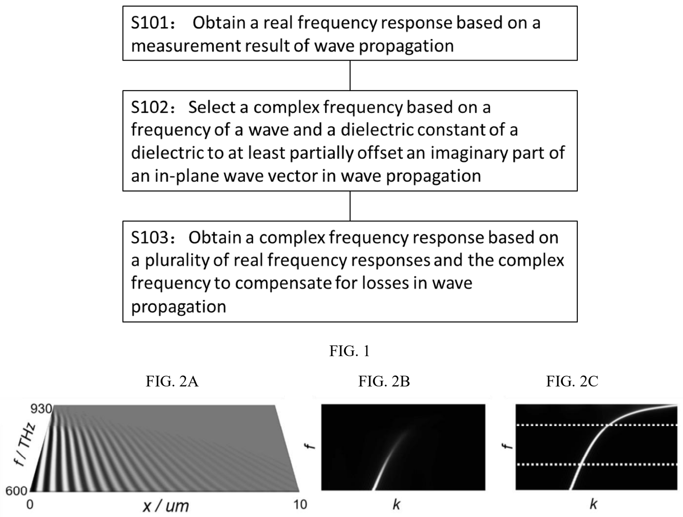

Based on the foregoing content, the present invention provides a method for compensating for losses of waves in dielectric propagation by synthesizing complex frequency waves. FIG. 1 shows a flowchart of the method. The method includes the following steps.

Step S101: Obtain a real frequency response based on a measurement result of wave propagation.

The measurement result of wave propagation may be a wave strength at a certain location, for example, a wave amplitude, an electric field strength, or a magnetic field strength.

Wherein, a plurality of real frequency responses are obtained based on a plurality of measurement results of wave propagation within a period of time.

Step S102: Select a complex frequency based on a frequency of a wave and a dielectric constant of a dielectric to at least partially offset an imaginary part of an in-plane wave vector in wave propagation.

In an embodiment, the complex frequency is selected so that the imaginary part of the in-plane wave vector is zero or close to zero. In an embodiment, a value of an imaginary part of the complex frequency may be obtained by means of calculation by using the foregoing formula (5) and formula (6).

Step S103: Obtain a complex frequency response based on a plurality of real frequency responses and the complex frequency to compensate for losses in wave propagation.

In an embodiment, the complex frequency response may be calculated based on the foregoing formula (6). In another embodiment, the complex frequency response may be calculated based on an integral formula. For example, the integral formula may be $F(\widetilde{\omega}) \approx \int_a^b F(\omega') \frac{1}{\text{i}(\widetilde{\omega}-\omega')} \mathrm{e}^{\text{i}(\widetilde{\omega}-\omega')t} \mathrm{d}\omega'/2\pi$, where an integral lower limit a is less than a real part of the complex frequency $\widetilde{\omega}$, and an integral upper limit b is greater than the real part of the complex frequency $\widetilde{\omega}$. A person skilled in the art should understand that the foregoing formula (6) and the foregoing integral formula can be modified or changed to achieve an effect of offsetting or compensating for losses in wave propagation. Therefore, the foregoing modification or change falls within the protection scope of the present invention. That is, any method for obtaining a complex frequency response based on a combination of a plurality of real frequency responses falls within the protection scope of the present invention.

In one embodiment, it is assumed that a dielectric constant of a realistic plasmonic metal described by the Drude model is $\varepsilon = 5 - \omega_p^2/(\omega^2 + i\omega\gamma)$, where $\omega_p$ = 1.442 × $10^{16}Hz$, and $\gamma$ = 3 × $10^{14}Hz$. The metal supports SPPs at frequencies below a plasmon polariton frequency. An infinitely long antenna placed on a flat plasmonic metal serves as a SPP source when illuminated by light. FIG. 2A shows an excited field distribution of SPPs. As the frequency increases, the propagation distance of the SPPs decreases, which means that higher-frequency SPPs have shorter propagation lengths due to stronger interface confinement. FIG. 2B shows corresponding Fourier distribution of the SPPs. A result shows that a high frequency mode becomes blurred and finally invisible. Therefore, plasmonic losses need to be balanced by using a complex frequency to implement lossless propagation. A complex frequency field distribution may be synthesized by using a linear combination of real frequency field distributions,

$$\mathrm{E}(\widetilde{\omega}, r, t) = \sum_i \mathrm{E}(\omega_i', r)e^{-i\omega_i't}\Delta\omega/(2\pi i(\widetilde{\omega} - \omega_i')) \qquad (7)$$

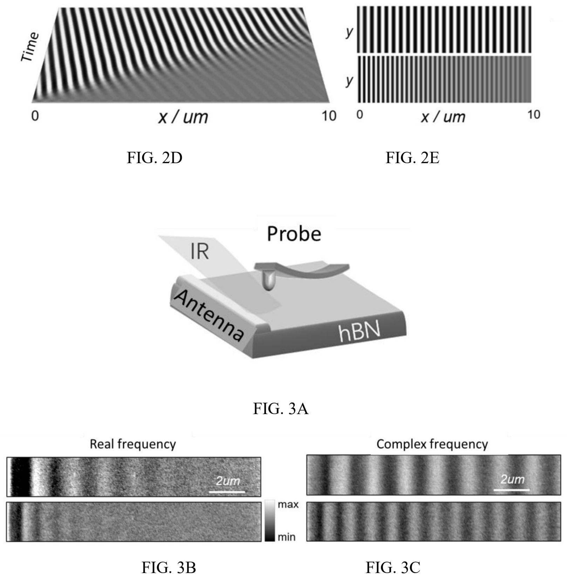

The complex frequency $\tilde{\omega} = \omega - i\beta$, a value of $\beta$ is obtained by using formula (4), E is the electric field strength of a wave, and r is a location of the wave, for example, one-dimensional or two-dimensional coordinates. FIG. 2C shows dispersion under complex frequency excitation, completely recovering the dispersion at higher frequencies. FIG. 2D shows dynamic evolution at different times of complex frequency excitation at $\tilde{f}$ = (700 - 42.3i) THz (a real part thereof is represented by a dotted line at the bottom of FIG. 2C). As time increases, the propagation distance extends linearly, but the amplitude remains uniform at different locations. This visually provides lossless propagation of surface plasmon polaritons at a complex frequency, which is in sharp contrast to propagation at a real frequency. FIG. 2E shows corresponding spatial field distributions at $t$ = 5.5 × $10^{-2}$ ps, the upper half of FIG. 2E shows a spatial field distribution of $\tilde{f}$ = (700 - 6.73i) THz, and the lower half of FIG. 2E shows a spatial field distribution of $\tilde{f}$ = (850 - 17i) THz (a real part thereof represented by a dotted line at the upper part of FIG. 2C). As shown in FIG. 2E, attenuation is much slower than a real frequency case.

The compensation for losses is applicable not only to metals described by the Drude model, but also to materials with a more complex dielectric function, such as van der Waals materials that support PhPs. For PhPs, there is also a specific complex frequency solution satisfying $Im(k)=0$.

In an embodiment, a hexagonal boron nitride (hBN) thin film is used, which supports in-plane isotropic PhPs, and a complex frequency may be used to compensate for intrinsic losses of the thin film to observe lossless propagation of phonon polaritons. FIG. 3A shows an experimental apparatus based on scattering-type scanning near-field optical microscopy (s-SNOM) technology. A long gold antenna placed on the hBN thin film is used to transmit 1D PhPs. An electric field distribution is measured in a frequency range of 1421 $cm^{-1}$ to 1503 $cm^{-1}$, with a step of 2 $cm^{-1}$. Two field distributions with real frequencies of 1451 $cm^{-1}$ and 1477 $cm^{-1}$ are selected as center frequencies, to synthesize complex frequency responses at $\tilde{f}_1$ = (1451 - 4.5i) $cm^{-1}$ and $\tilde{f}_2$ = (1477 - 6i) $cm^{-1}$. A corresponding imaginary part represents an optimized value for each frequency. FIG. 3B shows field distributions of two real frequencies, and FIG. 3C shows field distributions of two complex frequencies. An experimental result shows that propagation attenuation at a real frequency is very strong, and the propagation of polaritons at a complex frequency is almost non-dissipative.

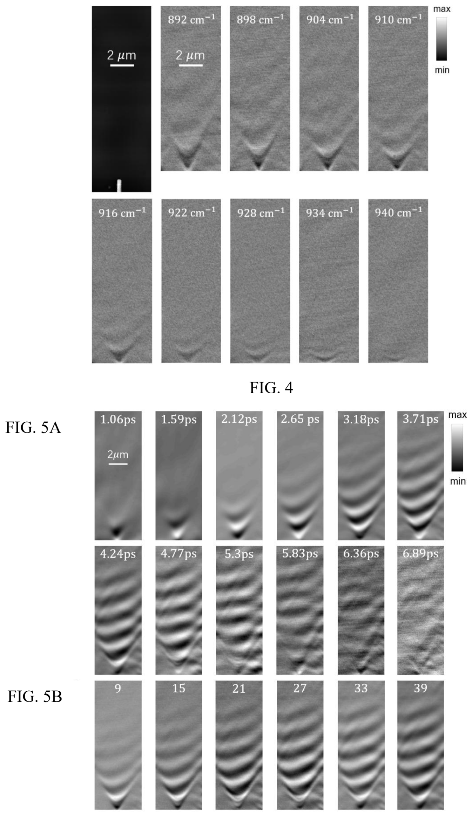

In an embodiment, a complex frequency method is used to study time evolution of a more complex field distribution supported by a van der Waals crystal $\alpha$ - $MoO_3$ ($MoO_3$) thin film, the thin film being highly anisotropic and supporting natural in-plane hyperbolic polaritons. A gold antenna is placed on the $MoO_3$ thin film to excite PhPs. FIG. 4 shows atomic force microscopy (AFM) images that show near-field distributions on a $MoO_3$ interface measured by using SNOM at different frequencies. An overall frequency range is 891 $cm^{-1}$ to 943 $cm^{-1}$, with an interval of 1 $cm^{-1}$. A field distribution change exhibits a characteristic hyperbolic propagation behavior with concave wavefronts. As a frequency increases, the wavelength decreases, field confinement is stronger, and propagation attenuation is stronger. At all measured frequencies, the attenuation length of polaritons is less than two wavelengths due to significant intrinsic losses of a material.

FIG. 5A shows synthesized electric field distributions of a complex frequency (910 - 6.5i) $cm^{-1}$ at different times, with a time step of 0.53 ps and a total number of frequencies of 53. For a smaller t, noise is smoothed to a large extent by summing multifrequency signals. As time goes on, waves propagate increasingly farther upward, far beyond the attenuation length of two wavelengths at a real frequency. A two-dimensional field map is optimal at about 4.24 ps.

The propagation length is 8.7 $\mu$m (along a vertical direction), and the propagation length corresponding to a center real frequency is only 1.6 $\mu$m. Therefore, the propagation length in this complex frequency method increases by more than four times compared with the center real frequency. By further increasing t, noise begins to dominate as a signal continues to attenuate in a time domain. When the time exceeds 4.77 ps, field distributions begin to appear chaotic. Therefore, when determining the optimal time for constructing a wave in a complex frequency domain, a trade-off needs to be performed between relatively long propagation and a signal-to-noise ratio.

The inventor further studied effects of the number of frequency points (that is, the number of discrete frequencies $\omega_i'$). FIG. 5B shows imaging patterns with different numbers of synthesized frequencies, where a center frequency is fixed at 910 cm$^{-1}$, a frequency interval is fixed at 1 cm$^{-1}$, and a time snapshot is fixed at 4.24 ps. Obviously, a field map of nine frequency points has significantly improved compared with a real frequency. As the number of frequencies increases to 21, the attenuation length increases significantly. However, a further increase to 39 does not result in a significant improvement.

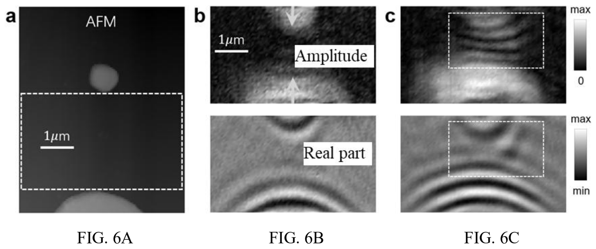

In an embodiment, an interference behavior of PhPs is studied using a complex frequency method. Two circular antennas with different diameters (0.8 $\mu$m and 3 $\mu$m) are fabricated on a MoO$_3$ thin film to excite phonon polaritons. FIG. 6A shows an atomic force microscopy image of an experimental sample. The field distribution in a white dotted line frame is scanned by using an s-SNOM probe. The amplitude and a real part of an electric field distribution at a frequency of $f$ = 990 cm$^{-1}$ are shown by the upper figure and the lower figure in the FIG. 6B respectively. PhPs emitted from two antennas propagate toward each other, but they do not form discernible interference fringes due to attenuation. By synthesizing a field plot at a complex frequency $\tilde{f}$ = (990 - 2i) cm$^{-1}$, intrinsic losses in the MoO$_3$ thin film are compensated for, so that the propagation time of the PhPs is longer. This facilitates the formation of a clear interference pattern between antennas, as shown in FIG. 6C.

It is important to implement almost lossless propagation of polaritons. The lossless propagation of polaritons can be used in development of photonic integrated circuits, where an ability to transmit signals over long distances is essential to ensure performance and reliability of the circuits, and is also beneficial to applications such as photonic circuits, waveguides, and plasma/phonon structure lighting microscopes.

In the method for compensating for losses in wave propagation by synthesizing complex frequency waves in the present invention, complex frequency waves are synthesized by using a complex frequency with a virtual gain and a plurality of real frequency responses, so that losses in wave propagation can be compensated for, to implement lossless propagation of waves.

Although the present invention has been described by using preferred embodiments, the present invention is not limited to the embodiments described herein, and includes various changes and variations without departing from the scope of the present invention.

**Claims**

1. A method for compensating for losses in wave propagation, comprising:

   obtaining a real frequency response based on a measurement result of wave propagation;
   selecting a complex frequency based on a frequency of a wave and a dielectric constant of a dielectric to at least partially offset an imaginary part of an in-plane wave vector in wave propagation; and
   obtaining a complex frequency response based on a plurality of real frequency responses and the complex frequency to compensate for losses in wave propagation.

2. The method for compensating for losses in wave propagation according to claim 1, wherein the step of obtaining a complex frequency response based on a plurality of real frequency responses and the complex frequency to compensate for losses in wave propagation comprises calculating a complex frequency response by using the following formula:

$$F(\widetilde{\omega}, r, t) \approx \sum_i F(\omega'_i, r) e^{-i\omega_i' t} \Delta\omega / (2\pi i (\widetilde{\omega} - \omega_i'))$$

wherein $F(\omega'_i, r)$ is a real frequency response, $F(\widetilde{\omega}, r, t)$ is a complex frequency response, $\omega_i'$ is a real frequency, i is a positive integer, $\widetilde{\omega}$ is a complex frequency, t is a time, $\Delta\omega$ is an interval frequency of the real frequency $\omega_i'$, and r is a location of a wave.

3. The method for compensating for losses in wave propagation according to claim 1 or 2, wherein the wave is a polariton, and the measurement result of wave propagation is an electric field strength of the wave.

4. The method for compensating for losses in wave propagation according to claim 3, wherein the complex frequency $\tilde{\omega} = \omega - i\beta$, $\omega$ is a center frequency, and $\beta$ is a virtual gain, which is selected to enable the imaginary part of the in-plane wave vector to be zero.

5. The method for compensating for losses in wave propagation according to claim 4, wherein a dielectric constant of a dielectric in which a wave propagates is described by a Drude model as $\varepsilon_m = \varepsilon_r - \omega_p^2/(\omega^2 + i\omega\gamma)$, $\varepsilon_m$ is the dielectric constant of the dielectric, $\varepsilon_r$ is a dielectric constant when the frequency $\omega$ tends to infinity, $\omega_p$ is a plasmon polariton frequency of a dielectric layer, and $\gamma$ is a damping rate of the dielectric layer.

6. The method for compensating for losses in wave propagation according to claim 5, wherein

$$\beta \approx \gamma\omega_p^2\omega^2/(2\left(\omega_p^2 - \varepsilon_r\omega^2\right)^2 + 2\varepsilon_r\omega^4) \cdot$$

7. The method for compensating for losses in wave propagation according to claim 4, wherein a dielectric constant of a dielectric in which a wave propagates is described by a Lorentz model as $\varepsilon_m = \varepsilon_r - \omega p^2/(\omega^2 + i\omega\gamma - \omega_0^2)$, $\varepsilon_m$ is the dielectric constant of the dielectric, $\varepsilon_r$ is a dielectric constant when the frequency $\omega$ tends to infinity, $\omega_p$ is a plasmon polariton frequency of a dielectric layer, $\gamma$ is a damping rate of the dielectric layer, and $\omega_0$ is a resonance frequency of the model.

8. The method for compensating for losses in wave propagation according to claim 7, wherein

$$\beta \approx 0.5\gamma\omega_p^2\omega^2/(\varepsilon_r(\varepsilon_r + 1)(\omega^2 - \omega_0^2)^2 + \left(\omega_0^2 + 2\varepsilon_r(\omega_0^2 - \omega^2)\right)\omega_p^2 + \omega_p^4) \cdot$$

9. A computer-readable storage medium, comprising a computer program thereon, wherein the computer program can be executed by a processor to implement the steps of the method according to any one of claims 1 to 8.

10. A electronic device, comprising:

    one or more processors; and
    a memory, configured to store one or more executable instructions;
    the one or more processors being configured to implement the steps of the method according to one of claims 1 to 8 by executing the one or more executable instructions.

S101： Obtain a real frequency response based on a measurement result of wave propagation

S102： Select a complex frequency based on a frequency of a wave and a dielectric constant of a dielectric to at least partially offset an imaginary part of an in-plane wave vector in wave propagation

S103： Obtain a complex frequency response based on a plurality of real frequency responses and the complex frequency to compensate for losses in wave propagation

FIG. 1

FIG. 2A

FIG. 2B

FIG. 2C

FIG. 2D

FIG. 2E

FIG. 3A

FIG. 3B

FIG. 3C

FIG. 4

FIG. 5A

FIG. 5B

FIG. 6A

FIG. 6B

FIG. 6C

## INTERNATIONAL SEARCH REPORT

| International application No. |
| --- |
| **PCT/CN2024/103061** |

| A. | CLASSIFICATION OF SUBJECT MATTER |
| --- | --- |

H04B 11/00(2006.01)i

According to International Patent Classification (IPC) or to both national classification and IPC

| B. | FIELDS SEARCHED |
| --- | --- |

Minimum documentation searched (classification system followed by classification symbols)

IPC: H04B G02B

Documentation searched other than minimum documentation to the extent that such documents are included in the fields searched

Electronic data base consulted during the international search (name of data base and, where practicable, search terms used)

CNTXT; ENTXT; ENTXTC; VEN; DWPI; CNKI; IEEE: 极化激元, 电磁波, 补偿, 均衡, 平衡, 抵消, 损耗, 损失, 复频率, 实频率, 响应, 介质, 虚部, polariton, electromagnetic wave, compensation, equalization, balancing, cancellation, loss, complex frequency, real frequency, response, medium, imaginary part

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 105759326 A (NORTH UNIVERSITY OF CHINA) 13 July 2016 (2016-07-13) description, paragraphs [0016]-[0023] | 1-10 |
| A | CN 103344709 A (NANJING UNIVERSITY OF AERONAUTICS AND ASTRONAUTICS) 09 October 2013 (2013-10-09) entire document | 1-10 |
| A | US 2009219623 A1 (SHALAEV Vladimir M. et al.) 03 September 2009 (2009-09-03) entire document | 1-10 |
| A | US 2010060977 A1 (MASSACHUSETTS INSTITUTE OF TECHNOLOGY) 11 March 2010 (2010-03-11) entire document | 1-10 |
| A | 范辉颖 等 (FAN, Huiying et al.). "非厄密电磁超表面研究进展 (Research Progress of Non-Hermitian Electromagnetic Metasurfaces)" 物理学报 (Acta Physica Sinica). 31 December 2022 (2022-12-31), entire document | 1-10 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2024** | **12 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103061**

| Patent document cited in search report | | | Publication date (day/month/year) | Patent family member(s) | | | Publication date (day/month/year) |
|---|---|---|---|---|---|---|---|
| CN | 105759326 | A | 13 July 2016 | None | | | |
| CN | 103344709 | A | 09 October 2013 | None | | | |
| US | 2009219623 | A1 | 03 September 2009 | EP | 1991496 | A2 | 19 November 2008 |
| | | | | WO | 2007103077 | A2 | 13 September 2007 |
| US | 2010060977 | A1 | 11 March 2010 | WO | 2010008638 | A2 | 21 January 2010 |

Form PCT/ISA/210 (patent family annex) (July 2022)